(19) Europäisches Patentamt
European Patent Office
Office européen des brevets

(11) **EP 3 872 501 A1**

(12) **EUROPÄISCHE PATENTANMELDUNG**

(43) Veröffentlichungstag:
**01.09.2021 Patentblatt 2021/35**

(51) Int Cl.:
*G01P 3/486* (2006.01)  *G01D 5/347* (2006.01)

(21) Anmeldenummer: **21154328.5**

(22) Anmeldetag: **29.01.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **27.02.2020 DE 102020105092**

(71) Anmelder: **SICK AG**
**79183 Waldkirch (DE)**

(72) Erfinder:
• **Sellmer, Christian**
  **78166 Donaueschingen (DE)**
• **Hopp, David**
  **78166 Donaueschingen (DE)**
• **Thomae, Dominic**
  **78048 Villingen-Schwenningen (DE)**

(74) Vertreter: **Hehl, Ulrich**
**SICK AG**
**Intellectual Property**
**Erwin-Sick-Strasse 1**
**79183 Waldkirch (DE)**

(54) **GEBERVORRICHTUNG UND VERFAHREN ZUR BESTIMMUNG EINER KINEMATISCHEN GRÖSSE EINER RELATIVBEWEGUNG**

(57)     Es wird eine Gebervorrichtung (10) zur Bestimmung einer kinematischen Größe einer Relativbewegung eines ersten Objekts zu einem zweiten Objekt angegeben, wobei die Gebervorrichtung (10) eine mit dem ersten Objekt verbindbare Maßverkörperung (14) und eine mit dem zweiten Objekt verbindbare optische Abtasteinheit (18) mit mindestens einem ersten Lichtempfangselement (22a) zur Erzeugung eines ersten Abtastsignals durch Erfassen der Maßverkörperung (14) sowie eine Steuer- und Auswertungseinheit (26) aufweist, die dafür ausgebildet ist, die kinematische Größe aus dem Abtastsignal zu bestimmen. Dabei weist die Gebervorrichtung (10) ferner ein dem ersten Lichtempfangselement (22a) nachgeordnetes erstes Differenzierglied (24a) auf, um ein abgeleitetes erstes Abtastsignal zu erzeugen, und die Steuer- und Auswertungseinheit (26) ist weiterhin dafür ausgebildet, aus dem abgeleiteten ersten Abtastsignal die Geschwindigkeit der Relativbewegung zu bestimmen. Das Signal kann sinusförmig oder dreieckförmig sein. Durch die Ableitung des Signals wird die Veränderung der vom Detektor empfangenen Lichtintensität erfasst. Die Amplitude dieses Signals ändert sich mit der Geschwindigkeit. Bei Verwendung von zwei um 90 Grad zueinander phasenverschobenen Abtastsignalen kann die Amplitude auch als Vektorlänge durch Addition der Quadrate der abgeleiteten Abtastsignale bestimmt werden.

Figur 1

EP 3 872 501 A1

**Beschreibung**

Die Erfindung betrifft eine Gebervorrichtung und ein Verfahren zur Bestimmung einer kinematischen Größe einer Relativbewegung nach dem Oberbegriff von Anspruch 1 beziehungsweise 14.

Bei Gebervorrichtungen werden lineare und rotatorische Systeme unterschieden. Ein Lineargeber bestimmt eine Verschiebung auf einer Achse. Ein Drehgeber, Drehwinkelsensor oder Encoder dient dagegen der Erfassung eines Drehwinkels oder einer Winkelstellung beispielsweise einer Welle eines Antriebselements. Dabei wird jeweils eine Maßverkörperung abgetastet, die längs der linearen Achse beziehungsweise an der Welle mitdrehend angebracht ist. Die Maßverkörperung erzeugt über die Relativbewegung eine Intensitätsmodulation in einem Abtastsensor. So sind Sin/Cos-Geber verbreitet, die zwei analoge Ausgangssignale mit einem positionsabhängigen sinusförmigen beziehungsweise cosinusförmigen Verlauf zur Verfügung stellen. Die Phase und die Anzahl Perioden dieser Signale repräsentieren jeweils mit einem 90°-Versatz die gesuchte Position. Oft gibt es mehr als eine abgetastete Codespur, beispielsweise eine absolute und eine inkrementelle Codespur.

Für die zugrundeliegenden Sensorprinzipien werden verschiedene Technologien genutzt. Optische Drehgeber verwenden eine Codescheibe mit als Code dienenden Öffnungen oder Reflexmarken, die das Signal eines Lichtsenders modulieren, so dass ein in Transmission oder Reflexion angeordneter Lichtempfänger Positionssignale empfängt. Das Prinzip ist auch auf Lineargeber übertragbar.

In vielen Anwendungen ist gar nicht die Position die interessierende Messgröße, sondern die Geschwindigkeit oder die Beschleunigung. So werden beispielsweise für die Regelung von Motoren Encoder beziehungsweise Motor-Feedback-Systeme eingesetzt, in denen aus den Positionswerten die Geschwindigkeitsinformation berechnet wird. Dazu sind mindestens zwei Positionswerte sowie der zeitliche Abstand zwischen den Messungen dieser Positionswerte erforderlich.

Dieses Vorgehen hat jedoch eine Reihe von Nachteilen. Für eine ausreichende Genauigkeit der Geschwindigkeitsbestimmung ist eine hohe Positionsauflösung erforderlich. Fehler in der Bestimmung des zeitlichen Abstands der Positionsmessungen untereinander, etwa durch Abweichungen bei kontinuierlichen aufeinanderfolgenden Positionsmessungen, wirken sich als weitere Ungenauigkeit der Geschwindigkeitsmessung aus. Da eine Geschwindigkeit erst aus mindestens zwei Positionswerten berechnet werden kann, entsteht eine zeitliche Latenz. Ein grundsätzliches Problem besteht darin, dass die maximale Geschwindigkeit der gemessenen Bewegung bei einem Positionsmesssystem durch die Integrationszeit der Sensoren begrenzt ist: Die Messauflösung nimmt ab, weil die Sensoren beginnen, über Codeelemente hinweg zu integrieren.

Im Bereich der Bildverarbeitung ist in jüngerer Zeit eine neuartige Kameratechnik entstanden, die sogenannte ereignis- oder eventbasierte Kamera. Darin integrieren die Pixel nicht Helligkeitsinformationen auf wie üblich. Vielmehr prüft jedes Pixel einzeln, ob es eine Änderung in der Intensität feststellt. Jedes Pixel ist somit eine Art unabhängiger Bewegungsdetektor. Eine erfasste Bewegung wird individuell als Ereignis gemeldet. Dadurch reagiert die ereignisbasierte Kamera äußerst schnell und eigenständig auf die Dynamik in der Szene. Die Bilddaten sind für das menschliche Auge nicht so intuitiv zu erfassen, weil die statischen Bildanteile fehlen. Eine ereignisbasierte Kamera wird beispielsweise in einem Whitepaper der Firma Prophesee beschrieben, das auf deren Internetseite abgerufen werden kann. Die Arbeit von Serrano-Gotarredona, Teresa, Juan Antonio Leñero-Bardallo, and Bernabe Linares-Barranco, "A bioinspired 128x128 pixel dynamic-vision-sensor" (2011) stellt einen entsprechenden Bildsensor vor. Aus der WO 2015/036592 A1, WO 2017/174579 A1 und WO 2018/073379 A1 sind jeweils Pixelschaltkreise für eine ereignisbasierte Kamera bekannt. Ein ereignisbasierter Bildsensor ist jedoch für eine gattungsgemäße Gebervorrichtung viel zu baugroß, teuer und komplex, zumal es auch einer entsprechend aufwändigen Bildauswertung bedürfte.

Es ist daher Aufgabe der Erfindung, die Messergebnisse einer gattungsgemäßen Gebervorrichtung zu verbessern.

Diese Aufgabe wird durch eine Gebervorrichtung und ein Verfahren zur Bestimmung einer kinematischen Größe einer Relativbewegung nach Anspruch 1 beziehungsweise 14 gelöst. Die Gebervorrichtung kann je nach Ausführungsform eine kinematische Größe einer Linearbewegung oder einer Rotationsbewegung zweier Objekte zueinander bestimmen. Eine Maßverkörperung ist mit dem einen Objekt und eine optische Abtasteinheit mit dem anderen Objekt verbindbar, so dass sie die Maßverkörperung und die optische Abtasteinheit die Relativbewegung mitvollziehen. Die Maßverkörperung umfasst vorzugsweise mindestens eine Codespur, die für eine Abtastung im Auflicht helle und dunkle Codeelemente oder für eine Abtastung im Durchlicht transparente und intransparente Bereiche aufweist. Die optische Abtasteinheit umfasst mindestens ein erstes Lichtempfangselement. Eine Steuer- und Auswertungseinheit bestimmt aus dem Abtastsignal die kinematische Größe.

Die Erfindung geht von dem Grundgedanken aus, Abtastsignale zu erzeugen und auszuwerten, die statt einer Positionsinformation eine Geschwindigkeitsinformation repräsentieren. Dazu werden die Abtastsignale sozusagen direkt an der Quelle oder im Frontend durch ein dem Lichtempfangselement nachgeordnetes Differenzierglied abgeleitet, vorzugsweise mit einem analogen Differenzierglied analog abgeleitet. Das abgeleitete Abtastsignal beschreibt die Änderung der Beleuchtungsintensität durch die bewegte Codespur, trägt also eine Geschwindigkeitsinformation. Die Steuer- und Auswertungseinheit bestimmt aus den dem abgeleiteten Abtastsignal die Geschwindigkeit der Relativbewegung als kinematische Größe.

Die Erfindung hat den Vorteil, dass die Geschwindigkeit direkt oder unmittelbar bestimmt wird und nicht wie herkömmlich aus zwei zeitlich versetzten Positionsmessungen. Weder muss die Differenz zweier Positionswerte bestimmt werden, noch ist eine zeitliche Integration zur Positionsbildung erforderlich. Diese Ermittlung der Geschwindigkeit erfordert weniger Zeit, somit sinkt die Latenz im System, und Geschwindigkeiten können schneller bereitgestellt werden. Dabei ist die Geschwindigkeitsinformation auch genauer, da sie nicht von zwei Messungen sowie der Bestimmung des zeitlichen Abstands dieser Messungen abhängt. Die Messauflösung bleibt auch mit steigender Geschwindigkeit konstant, die erfindungsgemäße Messung ist anders als ein herkömmliches positionsbasiertes System robust gegen hohe Relativbewegungen.

Die Gebervorrichtung weist bevorzugt ein zweites Lichtempfangselement zur Erzeugung eines zweiten Abtastsignals und ein dem zweiten Lichtempfangselement nachgeordnetes zweites Differenzierglied auf, um ein abgeleitetes zweites Abtastsignal zu erzeugen, wobei die Steuer- und Auswertungseinheit dafür ausgebildet ist, die Geschwindigkeit der Relativbewegung aus dem abgeleiteten ersten Abtastsignal und dem abgeleiteten zweiten Abtastsignal zu bestimmen. Die Bezeichnung als erstes und zweites Lichtempfangselement erfolgt ohne jede technische Einschränkung, wobei diese Namen auch für die zugehörigen Signale verwendet werden. Die beiden Lichtempfangselemente sind so angeordnet, dass sie durch Erfassen der Maßverkörperung beziehungsweise von deren Codespur ein erstes und zweites Abtastsignal erzeugen. Sie bilden somit insbesondere eine inkrementelle Photodiodenanordnung aus mindestens zwei Photodioden.

Das erste Differenzierglied ist bevorzugt in das erste Lichtempfangselement und/oder das zweite Differenzierglied in das zweite Lichtempfangselement integriert. Das abgeleitete Abtastsignal, das ein Geschwindigkeits- anstelle eines herkömmlichen Positionssignals ist, wird dann unmittelbar in dem Lichtempfangselement selbst erzeugt. Das Lichtempfangselement, beispielsweise eine Photodiode, ist selbst schon ein Geschwindigkeits- oder Veränderungsmesser statt wie herkömmlich ein Intensitätsmesser.

Die Lichtempfangselemente weisen bevorzugt eine aktive Fläche mit einer durch einen Sinus begrenzten Geometrie auf. Anders ausgedrückt werden sinusförmige Lichtempfangselemente verwendet. Nochmals bevorzugt ist die Grenze die erste Halbperiode eines Sinus. Die X-Richtung dieses Sinus entsprich der Bewegungsrichtung der Relativbewegung. Wenn über die aktive Fläche des Lichtempfangselements im Lauf der Relativbewegung ein heller oder dunkler Bereich einer Codespur wandert, entsteht aufgrund der sinusförmigen Geometrie ein Sinus als Abtastsignal.

Die Lichtempfangselemente sind bevorzugt in einem Abstand zueinander angeordnet, der ungleich einem Vielfachen der halben Periode des Sinus ist, insbesondere gleich einem Abstand von einer Viertelperiode. Die beiden Abtastsignale beziehungsweise deren Ableitung erzeugen dann komplementäre Messinformation über die Codespur. Mit Vielfachen von 180° oder einer halben Periode würde das Sinussignal lediglich redundant mit Vorzeichenwechsel aufgenommen. Bei einer Viertelperiode, also 90° oder 270°, ist die Messinformation maximal komplementär, die Abtastsignale entsprechen dann Sinus und Cosinus. Alle Angaben sind modulo der vollen Periode oder 360°.

Eine Codierung der Maßverkörperung und die aktive Fläche der Lichtempfangselemente sind vorzugsweise aufeinander abgestimmt. Das betrifft insbesondere die Geometrie der Codeelemente und deren Abstand zueinander, wobei auch die gegenseitige Positionierung in der Einbaulage berücksichtigt ist. Ein anschauliches Beispiel einer passenden Abstimmung aufeinander sind Codeelemente, die gerade mit einer Breite entsprechend der Breite der aktiven Fläche erfasst werden.

Die Steuer- und Auswertungseinheit ist bevorzugt dafür ausgebildet, aus dem abgeleiteten ersten Abtastsignal und dem abgeleiteten zweiten Abtastsignal eine Vektorlänge zu berechnen, insbesondere als Wurzel aus der Summe der Quadrate der abgeleiteten Abtastsignale. In einem Kreisdiagramm bestimmen das abgeleitete erste und zweite Abtastsignal jeweils die sin- und cos-Komponente. Die gesuchte Geschwindigkeit ist proportional zu der Vektorlänge. Aus der Beziehung $a = \sin^2 + \cos^2$ für die Vektorlänge oder Amplitude folgt eine vorteilhafte Rechenvorschrift als Wurzel aus der Summe der jeweils quadrierten abgeleiteten Abtastsignale.

Die Gebervorrichtung weist bevorzugt ein drittes und viertes Lichtempfangselement zur Erzeugung eines dritten Abtastsignals und eines vierten Abtastsignals auf, um aus dem ersten Abtastsignal und dem dritten Abtastsignal sowie dem zweiten Abtastsignal und dem vierten Abtastsignal jeweils ein Differenzsignal zu bilden. Weiterhin sind Bezeichnungen wie erstes, zweites, drittes und viertes nur austauschbare Namen. Damit können differentielle Signale bestimmt werden, um offsetfrei unabhängig von einem konstanten Signalanteil zu werden. Die Differenzbildung erfolgt vor oder nach dem Differenzieren. Damit ergeben sich insbesondere zwei Ausführungsformen: In der einen Ausführungsform sind vier Differenzierglieder für das erste bis vierte Abtastsignal vorgesehen, und das jeweilige Differenzsignal wird aus den abgeleiteten Abtastsignalen gebildet. In der anderen Ausführungsform werden zuerst die beiden Differenzsignale gebildet und dann in zwei Differenziergliedern abgeleitet. Das ist im Messergebnis gleichwertig, weil Differenzieren eine lineare Operation und daher die Reihenfolge vertauschbar ist. Es sind weitere Lichtempfangselemente denkbar, um mehr Statistik und aktive Fläche zu gewinnen und damit das Signal-Rausch-Verhältnis zu verbessern.

Das erste Lichtempfangselement ist bevorzugt als Sin-Element, das zweite Lichtempfangselement als Cos-Element, das dritte Lichtempfangselement als negatives Sin-Element und das vierte Lichtempfangselement als negatives Cos-Element ausgebildet. Das lässt sich durch die bereits beschriebene sinusförmige Geometrie und einen Abstand der Lichtempfangselemente zu dem ersten Lichtempfangselement von 90°, 180° und 270° modulo 360 ° erreichen.

Die Steuer- und Auswertungseinheit ist bevorzugt dafür ausgebildet, als kinematische Größe die Position des ersten Objekts zu dem zweiten Objekt zu bestimmen. Die erfindungsgemäße Gebervorrichtung ist in der Lage, direkt eine Geschwindigkeitsinformation aus abgeleiteten Abtastsignalen zu bestimmen. Nach dieser bevorzugten Ausführungsform wird zusätzlich oder stattdessen für eine gewisse Zeit oder unter bestimmten Bedingungen die Position bestimmt.

Die Steuer- und Auswertungseinheit ist bevorzugt dafür ausgebildet, die Differenzierglieder wahlweise zu überbrücken. Damit arbeitet die Gebervorrichtung vorübergehend durch Abschalten oder Überbrücken der Differenzierglieder wie eine herkömmliche positionsbestimmende Gebervorrichtung. Mit weiteren Mitteln wie beispielsweise Stromspiegeln können auch die Positionssignale, also die nicht abgeleiteten Abtastsignale, und die Geschwindigkeitssignale, also die abgeleiteten Abtastsignale, zugleich erzeugt und ausgewertet werden. Eine Positionsbestimmung bei überbrückten Differenziergliedern ist insbesondere für kleine Geschwindigkeiten sinnvoll, da dann die Abtastsignale kaum Änderungen unterworfen sind, demnach deren Ableitung innerhalb von Toleranzen einem Nullsignal zu nahekommen kann, um noch präzise Messungen zuzulassen.

Die Steuer- und Auswertungseinheit ist bevorzugt dafür ausgebildet, eine Position des ersten Objekts zu dem zweiten Objekt aus den abgeleiteten Abtastsignalen zu bestimmen. Als weitere Alternative zur Positionsbestimmung können auch die abgeleiteten Abtastsignale einer Positionsbestimmung zugrunde gelegt werden. Da die Ableitung des Sinus der Cosinus ist, erzeugt das jeweilige Differenzierglied letztlich ein Signal, das wie ein um 90° phasenverschobenes herkömmliches Positioniersignal ausgewertet, also insbesondere über den Arcustangens der Positionssignale eine Position berechnet werden kann. Dazu wird anstelle einer aufwändigen Integration lediglich die 90°-Phasenverschiebung zunächst rückgängig gemacht oder im ermittelten Positionswert als Konstante berücksichtigt. Prinzipiell lässt sich die Position auch durch Integration aus der gemessenen Geschwindigkeit oder Vektorlänge bestimmen, aber die beschriebenen Ausführungsformen mit Überbrücken der Differenzierglieder oder Ausnutzen der abgeleiteten Abtastsignale als Positionssignale ist deutlich einfacher.

Die Steuer- und Auswertungseinheit ist bevorzugt dafür ausgebildet, als kinematische Größe die Beschleunigung der Relativbewegung zu bestimmen, insbesondere durch Ableiten der Vektorlänge oder durch zwei in Reihe geschaltete Differenzierglieder, die den jeweiligen Lichtempfangselementen nachgeordnet sind. Für einige Anwendungen, wie die Regelung eines Motors, sind weder Position noch Geschwindigkeit die eigentlich interessante kinematische Größe, sondern erst die Beschleunigung. Diese lässt sich durch weitere Ableitung beispielsweise aus zwei aufeinanderfolgenden Messungen der Vektorlänge unter Berücksichtigung des Zeitversatzes bestimmen. Alternativ ist auch denkbar, zweimal abgeleitete Abtastsignale durch zwei in Reihe geschaltete Differenzierglieder auszuwerten.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1   eine schematische Darstellung einer Gebervorrichtung zur Geschwindigkeitsmessung aus abgeleiteten Abtastsignalen in einem rotierenden System;

Fig. 2   eine schematische Darstellung einer Gebervorrichtung zur Geschwindigkeitsmessung aus abgeleiteten Abtastsignalen in einem System mit Längsbewegung;

Fig. 3   eine Draufsicht auf sinusförmige aktive Flächen der Photodioden und die davon erfassten Codeelemente in einer Ausführungsform der Erfindung; und

Fig. 4   eine Blockdarstellung eines Empfangspfades einer Gebervorrichtung zur Bestimmung der Geschwindigkeit.

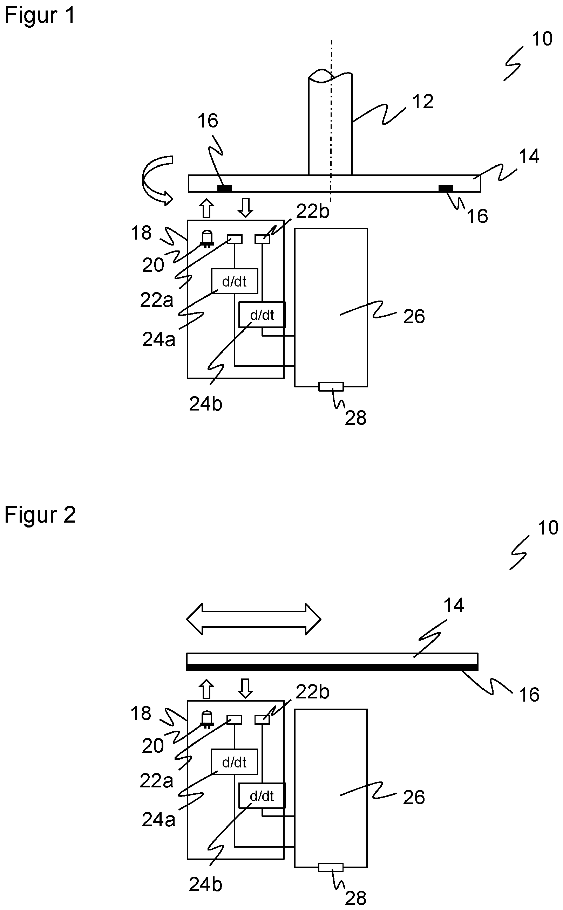

Figur 1 zeigt eine schematische Darstellung einer Gebervorrichtung 10, die als Drehgeber ausgebildet ist. Erfindungsgemäß wird jedoch statt wie sonst üblich nicht die Winkelposition, sondern unmittelbar die Winkelgeschwindigkeit gemessen, wobei die Winkelgeschwindigkeit verkürzt auch nur als Geschwindigkeit bezeichnet wird. Die Gebervorrichtung 10 weist eine mit der Welle 12 rotierende Codescheibe als Maßverkörperung 14 auf, und auf der Maßverkörperung 14 befindet sich eine Codespur 16. Die hier näher betrachtete Codespur 16 ist eine inkrementelle Codespur. Diese kann aber um auch sehr komplexe weitere Codespuren beispielsweise zur Absolutpositionierung ergänzt sein.

Eine Abtasteinheit 18 tastet die Codespur 16 im Verlauf der Drehbewegung ab. Die Abtasteinheit 18 umfasst einen Lichtsender 20 zum Beleuchten der Codespur 16 sowie einen ersten Lichtempfänger 22a und einen zweiten Lichtempfänger 22b zur Erfassung der Codespur 16. Die Maßverkörperung 14 beziehungsweise deren Codespur 16 fungiert als Modulator, während die Lichtempfänger 22a-b vorzugsweise als Photodioden ausgebildet sind und eine inkrementelle Photodiodenanordnung bilden. In anderen Ausführungsformen sind zusätzliche Lichtempfänger oder Photodioden vorgesehen, um Differenzsignale zu erfassen und/oder mehr Statistik beziehungsweise Fläche für ein besseres Signal-Rausch-Verhältnis bereitzustellen.

Den Lichtempfängern 22a-b ist jeweils ein Differenzierglied 24a-b nachgeordnet, das vorzugsweise als analoge Schaltung und nochmals bevorzugt gemeinsam mit der jeweiligen Photodiode integriert ausgebildet ist. Die Lichtempfänger 22a-b erzeugen mit Hilfe der Differenzierglieder 24a-b ein abgeleitetes Abtastsignal der Codespur 16, das somit die Veränderungen der relativ zu der Abtasteinheit 18 bewegten Codeelemente repräsentiert. Die Ableitung der Abtastsignale erfolgt somit direkt an der Quelle beziehungsweise schon im Frontend oder in der Photodiode beziehungsweise deren Ausleseschaltung.

Eine Steuer- und Auswertungseinheit 26 bewertet die abgeleiteten Abtastsignale, um die Winkelgeschwindigkeit und je nach Ausführungsform weitere kinematische Größen zu bestimmen. Diese Ausgabegrößen oder daraus ermittelte Größen werden an einem Ausgang 28 bereitgestellt.

Die Darstellung der Gebervorrichtung 10 in Figur 1 ist sehr schematisch. Daher ist die Ausgestaltung der Abtasteinheit 18 in Figur 1 sehr einfach gehalten, die beispielsweise ebenso im Durchlichtverfahren statt im Auflichtverfahren arbeiten könnte. Insbesondere in Bezug auf die Dimensionierungen und konkreten Positionen der Bauelemente kann die Gebervorrichtung 10 in der Praxis stark von Figur 1 abweichen kann.

Figur 2 zeigt eine schematische Darstellung einer Gebervorrichtung 10, die nun für eine lineare Bewegung statt für eine Drehbewegung ausgebildet ist. Die Maßverkörperung 14 ist in dieser Ausführungsform langgestreckt, und die Abtasteinheit 18 bewegt sich translatorisch in Richtung der Längserstreckung. Damit werden nun eine Geschwindigkeit und je nach Ausführungsform weitere kinematische Größen in Längsrichtung bestimmt. Zwischen einem rotatorischen System nach Figur 1 und einem translatorischen oder linearen System nach Figur 2 wird im Folgenden nicht mehr unterschieden. Es werden jeweils direkt im oder beim Lichtempfänger 22a-b abgeleitete Abtastsignale aus einer Codespur 16 erzeugt, aus denen unmittelbar eine (Winkel-)geschwindigkeit bestimmt wird.

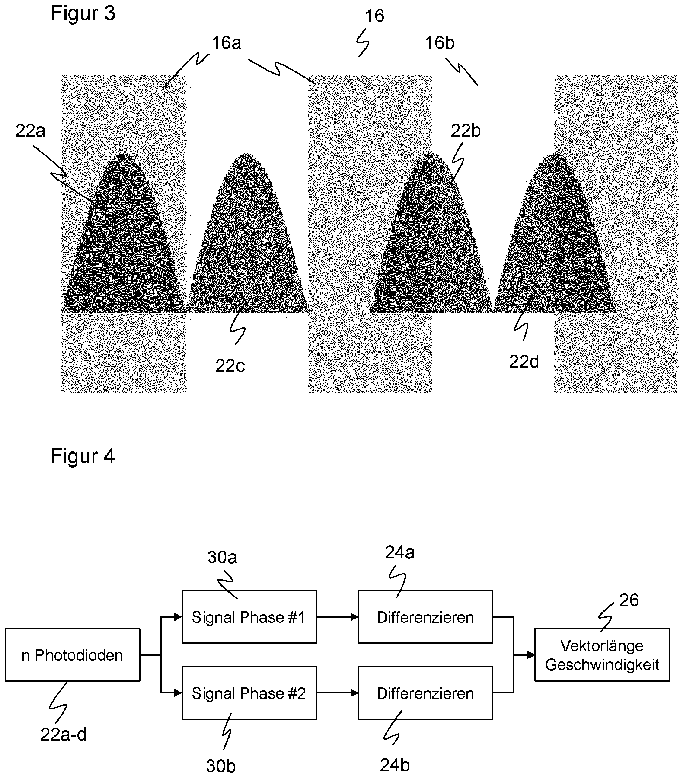

Figur 3 zeigt eine Draufsicht auf Photodioden oder Lichtempfänger 22a-d mit einer vorteilhaften sinusförmigen Geometrie der jeweiligen aktiven Fläche. Darunter ist schematisch eine inkrementelle Codespur 16 mit hellen und dunklen Codeelementen 16a-b dargestellt. Im Verlauf der Relativbewegung der Codespur wird aufgrund der sinusförmigen Geometrie in der abtastenden Photodiode ein sinusförmig moduliertes Intensitätssignal erzeugt.

Aufgrund des gegenseitigen Abstands zwischen den aktiven Flächen fungiert der Lichtempfänger 22a als positive Sinusdiode, der Lichtempfänger 22c im Abstand einer halben Periode des Sinus oder 180° als negative Sinusdiode, der Lichtempfänger 22b in einem Abstand einer Viertelperiode oder 90° (modulo 360°) als positive Cosinusdiode und der Lichtempfänger 22d in einem Abstand einer Dreiviertelperiode oder 270° als negative Cosinusdiode. Die Abtastsignale des Lichtempfängers 22a und des Lichtempfängers 22c, d.h. positive und negative Sinusdiode, sowie die Abtastsignale des Lichtempfängers 22b und des Lichtempfängers 22d, d. h. positive und negative Cosinusdiode, werden jeweils voneinander abgezogen. Dadurch entstehen Differenzsignale oder differentielle Abtastsignale, mit denen eine Unabhängigkeit von einem Offset oder einem konstanten Signalbeitrag erreicht wird.

Es sei zur Klarstellung betont, dass eine differentielle Signalerzeugung durch Differenzbildung zwischen einem positiven und einem negativen Abtastsignal nichts mit einer Ableitung durch ein Differenzierglied zu tun hat. Vielmehr werden die Signale der jeweiligen Lichtempfänger 22a-d zusätzlich durch Differenzierglieder abgeleitet, und zwar entweder schon einzeln in vier Differenziergliedern, die jeweils einem Lichtempfänger 22a-d nachgeordnet sind, oder nach der Differenzbildung in zwei Differenziergliedern. Die vorteilhafte sinusförmige Geometrie gemäß Figur 3 wird im Übrigen auch ausgenutzt, wenn die beiden negativen Lichtempfänger 22c-d weggelassen werden und nicht mit Differenzsignalen gearbeitet wird. Das führt dann lediglich dazu, dass die Offsetfreiheit verlorengeht. Umgekehrt können zusätzliche Lichtempfänger eingesetzt werden, um noch mehr Phasen abzutasten und/oder auf diesem Weg effektiv die jeweiligen aktiven Flächen zu vergrößern.

Figur 4 zeigt schematisch den Empfangspfad einer Ausführungsform der Gebervorrichtung 10 in Funktionsblöcken. Dabei werden zwei Lichtempfänger 22a-b wie in Figur 1 oder 2, vorzugsweise vier Lichtempfänger 22a-d gemäß Figur 3 und wahlweise eine andere Anzahl von mindestens zwei zueinander versetzt angeordneten Lichtempfängern eingesetzt.

Die als Modulator fungierende Codespur 16 wird von dem Lichtsender 20 beleuchtet und erzeugt in der Relativbewegung durch helle und dunkle beziehungsweise im Durchlichtaufbau durch lichtdurchlässige und lichtundurchlässige Codeelemente 16a-b ein Lichtmuster. Die Lichtempfänger 22a-d detektieren das Lichtmuster und erzeugen daraus Abtastsignale 30a-b in mindestens zwei unabhängigen Phasenlagen.

Aus den Abtastsignale 30a-b werden dann durch vorzugsweise analoge Schaltungen der Differenzierglieder 24a-b deren zeitliche Ableitungen gebildet. Ein jeweiliges abgeleitetes Abtastsignal beschreibt die zeitliche Änderung der Beleuchtungsintensität auf den Lichtempfängern 22a-d. Die Amplitude der abgeleiteten Abtastsignale ist demnach ein Maß für die Änderung und damit proportional zur Geschwindigkeit der Relativbewegung.

Diese Amplitude oder Vektorlänge wird in der Steuer- und Auswertungseinheit 26 aus den abgeleiteten Abtastsignalen geschätzt. Bei einer sinusförmigen Geometrie und um 90° versetzen Anordnung der Lichtempfänger 22a-d wie in Figur 3 entstehen sinus- und cosinusförmige abgeleitete Abtastsignale A und B, deren Vektorlänge sich sehr einfach als $\sqrt{A^2 + B^2}$ berechnen lässt. Dieser Rechenschritt kann über eine analoge Schaltung oder über digitalisierte abgeleitete Abtastsignale und anschließende digitale Berechnung erfolgen. Nach Reskalierung der Vektorlänge mit einem Proportionalitätsfaktor, der aus dem Gegebenheiten der verwendeten Gebervorrichtung 10 bestimmt oder beispielsweise auch eingelernt beziehungsweise kalibriert ist, steht ein direkt und unmittelbar aus einer einzigen Messung ermittelter Geschwindigkeitswert zur Verfügung.

Obwohl erfindungsgemäß abgeleitete Abtastsignale erzeugt werden, um unmittelbar eine Geschwindigkeit zu messen, kann die Gebervorrichtung 10 bei Bedarf weiterhin Positionen messen. Die sinusförmige Geometrie der Lichtempfänger 22a-d gemäß Figur 3 erzeugt als abgeleitete Abtastsignale Sinus- und Cosinussignale. Aus deren Quotient lässt sich wie in einem herkömmlichen Positionsmessgerät über den Arcustangens die Position rekonstruieren. Eine zeitliche Integration ist dabei nicht nötig beziehungsweise praktisch ohne Aufwand zu bestimmen, weil ja die Ableitung des Sinus der Cosinus ist. Es muss also lediglich die Phase um 90° zurückgeschoben oder als konstanter Versatz in der ermittelten Position berücksichtigt werden.

Eine Alternative zur Verwendung der abgeleiteten Abtastsignale für eine Positionsbestimmung ist, die Differenzierglieder 24a-b während der Positionsmessung vorübergehend zu überbrücken oder zu deaktivieren. Denkbar wäre auch eine Verzweigung beispielsweise mittels Stromspiegeln und dann eine parallele Auswertung der Abtastsignale selbst für eine Positionsmessung und der abgeleiteten Abtastsignale für eine Geschwindigkeitsmessung. Diese Alternative eignet sich insbesondere bei sehr kleinen Geschwindigkeiten und im Stillstand, da dann die abgeleiteten Abtastsignale nahezu oder vollständig zum Erliegen kommen.

Eine zusätzliche Positionsbestimmung ist auch noch auf weiteren Wegen vorstellbar. In Umkehrung des herkömmlichen Weges, Geschwindigkeiten aus zwei Positionsmessungen zu ermitteln, kann die erfindungsgemäß bestimmte Geschwindigkeit aus einer bekannten Nullposition heraus aufintegriert werden, um so Buch über die aktuelle Position zu führen. Weiterhin können zusätzliche Codespuren und Abtastungen vorgesehen sein, insbesondere Absolutcodierungen beispielsweise mit einem Pseudo-Random-Code. Allgemein sind beliebige Kombinationen aus absoluter und inkrementeller Positions- und Geschwindigkeitscodierung möglich.

Als weitere Messgröße neben Geschwindigkeit und optional Position kann auch die Beschleunigung ermittelt werden. Dazu lässt sich zum einen die Vektorlänge differenzieren. Eine weitere Möglichkeit besteht darin, die Differenzierglieder zweimal in Reihe zu schalten, um so ein beschleunigungsabhängiges Abtastsignal zu erhalten und auszuwerten.

Eine sinusförmige Geometrie der Lichtempfänger 22a-d ist aus mehreren Gründen besonders vorteilhaft. Damit kann die Amplitude oder Vektorlänge besonders einfach bestimmt werden, und die abgeleiteten Abtastsignale sind ohne komplizierte Integration auch für eine Positionsbestimmung verwendbar. Dennoch sind auch abweichende Geometrien vorstellbar. Dabei ist darauf zu achten, dass die jeweils zugleich ein Codeelement 16a-b erfassenden Flächenanteile eine eindeutige Positionszuordnung ermöglichen. Außerdem muss für die Berechnung der Geschwindigkeit eine Zuordnungsvorschrift berechnet werden, die zu der gewählten Geometrie passt.

Die bisher beschriebenen Ausführungsformen basieren auf mindestens zwei Lichtempfängern 22a-b. Eine erfindungsgemäße unmittelbare Messung der Geschwindigkeit ist jedoch abweichend auch mit nur einem Lichtempfänger möglich, dessen Abtastsignal abgeleitet wird. Dabei wird anstelle eines sinusförmigen Abtastsignals beispielsweise ein Dreieckssignal erzeugt. Eine dafür denkbare geeignete Form der aktiven Fläche des Lichtempfängers ist ein Rechteck, das jeweils sägezahnartig zu- und abnehmend partiell mit den dunklen und hellen Codeelementen überlappt. Wird die Ableitung eines Dreieckssignals gleichgerichtet, so liefert das in Analogie zu einer Vektorlänge bei Sin/Cos-Signalen ein zu der Geschwindigkeit proportionales Signal.

**Patentansprüche**

1.  Gebervorrichtung (10) zur Bestimmung einer kinematischen Größe einer Relativbewegung eines ersten Objekts zu einem zweiten Objekt, wobei die Gebervorrichtung (10) eine mit dem ersten Objekt verbindbare Maßverkörperung (14) und eine mit dem zweiten Objekt verbindbare optische Abtasteinheit (18) mit mindestens einem ersten Lichtempfangselement (22a) zur Erzeugung eines ersten Abtastsignals durch Erfassen der Maßverkörperung (14) sowie eine Steuer- und Auswertungseinheit (26) aufweist, die dafür ausgebildet ist, die kinematische Größe aus dem Abtastsignal zu bestimmen, **dadurch gekennzeichnet, dass** die Gebervorrichtung (10) ferner ein dem ersten Lichtempfangselement (22a) nachgeordnetes erstes Differenzierglied (24a) aufweist, um ein abgeleitetes erstes Abtastsignal zu erzeugen, und dass die Steuer- und Auswertungseinheit (26) weiterhin dafür ausgebildet ist, aus dem abgeleiteten ersten Abtastsignal I die Geschwindigkeit der Relativbewegung zu bestimmen.

2. Gebervorrichtung (10) nach Anspruch 1, die ein zweites Lichtempfangselement (22b) zur Erzeugung eines zweiten Abtastsignals und ein dem zweiten Lichtempfangselement (22b) nachgeordnetes zweites Differenzierglied (24b) aufweist, um ein abgeleitetes zweites Abtastsignal zu erzeugen, wobei die Steuer- und Auswertungseinheit (26) dafür ausgebildet ist, die Geschwindigkeit der Relativbewegung aus dem abgeleiteten ersten Abtastsignal und dem abgeleiteten zweiten Abtastsignal zu bestimmen.

3. Gebervorrichtung (10) nach Anspruch 1 oder 2, wobei das erste Differenzierglied (24a) in das erste Lichtempfangselement (22a) und/oder das zweite Differenzierglied (24b) in das zweite Lichtempfangselement (22b) integriert ist.

4. Gebervorrichtung (10) nach Anspruch 2 oder 3, wobei die Lichtempfangselemente (22a-d) eine aktive Fläche mit einer durch einen Sinus begrenzten Geometrie aufweisen.

5. Gebervorrichtung (10) nach Anspruch 4, wobei die Lichtempfangselemente (22a-d) in einem Abstand zueinander angeordnet sind, der ungleich einem Vielfachen der halben Periode des Sinus ist, insbesondere gleich einem Abstand von einer Viertelperiode.

6. Gebervorrichtung (10) nach einem der vorhergehenden Ansprüche, wobei eine Codierung der Maßverkörperung (14) und die aktive Fläche der Lichtempfangselemente (22a-d) aufeinander abgestimmt sind.

7. Gebervorrichtung (10) nach einem der Ansprüche 2 bis 6, wobei die Steuer- und Auswertungseinheit (26) dafür ausgebildet ist, aus dem abgeleiteten ersten Abtastsignal und dem abgeleiteten zweiten Abtastsignal eine Vektorlänge zu berechnen, insbesondere als Wurzel aus der Summe der Quadrate der abgeleiteten Abtastsignale.

8. Gebervorrichtung (10) nach einem der Ansprüche 2 bis 7, die ein drittes Lichtempfangselement (22c) und viertes Lichtempfangselement (22d) zur Erzeugung eines dritten Abtastsignals und eines vierten Abtastsignals aufweist, um aus dem ersten Abtastsignal und dem dritten Abtastsignal sowie dem zweiten Abtastsignal und dem vierten Abtastsignal jeweils ein Differenzsignal zu bilden.

9. Gebervorrichtung (10) nach einem der vorhergehenden Ansprüche, wobei das erste Lichtempfangselement (22a) als Sin-Element, ein zweites Lichtempfangselement (22b) als Cos-Element, ein drittes Lichtempfangselement (22c) als negatives Sin-Element und ein viertes Lichtempfangselement (22d) als negatives Cos-Element ausgebildet ist.

10. Gebervorrichtung (10) nach einem der vorhergehenden Ansprüche, wobei die Steuer- und Auswertungseinheit (26) dafür ausgebildet ist, als kinematische Größe die Position des ersten Objekts zu dem zweiten Objekt zu bestimmen.

11. Gebervorrichtung (10) nach einem der vorhergehenden Ansprüche, wobei die Steuer- und Auswertungseinheit (26) dafür ausgebildet ist, ein Differenzierglieder (24a-b) wahlweise zu überbrücken.

12. Gebervorrichtung (10) nach einem der vorhergehenden Ansprüche, wobei die Steuer- und Auswertungseinheit (26) dafür ausgebildet ist, eine Position des ersten Objekts zu dem zweiten Objekt aus abgeleiteten Abtastsignalen zu bestimmen.

13. Gebervorrichtung (10) nach einem der vorhergehenden Ansprüche, wobei die Steuer- und Auswertungseinheit (26) dafür ausgebildet ist, als kinematische Größe die Beschleunigung der Relativbewegung zu bestimmen, insbesondere durch Ableiten der Vektorlänge oder durch zwei in Reihe geschaltete Differenzierglieder (24a-b), die einem jeweiligen Lichtempfangselementen (22a-d) nachgeordnet sind.

14. Verfahren zur Bestimmung einer kinematischen Größe einer Relativbewegung eines mit einer Maßverkörperung (14) verbundenen ersten Objekts zu einem mit einer optischen Abtasteinheit (18) verbundenen zweiten Objekts, wobei die optische Abtasteinheit (18) mit mindestens einem ersten Lichtempfangselement (22a) durch Erfassen der Maßverkörperung (14) ein erstes Abtastsignal erzeugt und aus dem Abtastsignal die kinematische Größe bestimmt wird, **dadurch gekennzeichnet, dass** das erste Abtastsignal analog differenziert wird und die Geschwindigkeit der Relativbewegung aus dem abgeleiteten Abtastsignal bestimmt wird.

Figur 1

10

12

16

14

16

22b

18

20

22a

24a

24b

d/dt

d/dt

26

28

Figur 2

10

14

16

22b

18

20

22a

24a

24b

d/dt

d/dt

26

28

Figur 3

Figur 4

Europäisches Patentamt
European Patent Office
Office européen des brevets

# EUROPÄISCHER RECHERCHENBERICHT

Nummer der Anmeldung

EP 21 15 4328

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2004 053535 A (HATTORI MASAYUKI; TOHOKU RIKO KK) 19. Februar 2004 (2004-02-19) * Absätze [0012], [0013], [0018], [0025] - [0027], [0042], [0043] * ----- | 1-14 | INV. G01P3/486 G01D5/347 |
| X | JP 2006 010674 A (KYOCERA CORP) 12. Januar 2006 (2006-01-12) * Absätze [0029] - [0034], [0038], [0048], [0059], [0062] - [0064] * ----- | 1-6,8,9, 11,13,14 | |
| X | US 3 819 268 A (JOHNSON A) 25. Juni 1974 (1974-06-25) * Spalte 1, Zeile 20 - Spalte 1, Zeile 66 * * Spalte 3, Zeile 32 - Spalte 4, Zeile 25 * * Spalte 7, Zeile 14 - Spalte 8, Zeile 11; Abbildungen 1-6 * ----- | 1,2,5,6, 14 | |
| X | US 4 228 396 A (PALOMBO GASTON A ET AL) 14. Oktober 1980 (1980-10-14) * Spalte 2, Zeile 60 - Spalte 3, Zeile 27 * * Spalte 6, Zeile 29 - Spalte 7, Zeile 10 * * Spalte 9, Zeile 40 - Spalte 10, Zeile 6; Abbildungen 1-3,8 * ----- | 1,2,5,6, 10,14 | RECHERCHIERTE SACHGEBIETE (IPC) G01P G01D |
| X | EP 0 323 905 A2 (SHARP KK [JP]) 12. Juli 1989 (1989-07-12) * Spalte 1, Zeile 36 - Spalte 1, Zeile 55 * * Spalte 2, Zeile 16 - Spalte 3, Zeile 58 * * Spalte 5, Zeile 22 - Spalte 6, Zeile 3 * * Spalte 7, Zeile 11 - Spalte 7, Zeile 35; Abbildungen 1-7 * ----- | 1,2,5,6, 14 | |

Der vorliegende Recherchenbericht wurde für alle Patentansprüche erstellt

| Recherchenort | Abschlußdatum der Recherche | Prüfer |
|---|---|---|
| München | 13. Juli 2021 | Felicetti, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 15 4328

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-07-2021

| Im Recherchenbericht angeführtes Patentdokument | Datum der Veröffentlichung | Mitglied(er) der Patentfamilie | Datum der Veröffentlichung |
|---|---|---|---|
| JP 2004053535 A | 19-02-2004 | KEINE | |
| JP 2006010674 A | 12-01-2006 | JP 4824323 B2<br>JP 2006010674 A | 30-11-2011<br>12-01-2006 |
| US 3819268 A | 25-06-1974 | KEINE | |
| US 4228396 A | 14-10-1980 | KEINE | |
| EP 0323905 A2 | 12-07-1989 | EP 0323905 A2<br>JP H01178869 A | 12-07-1989<br>17-07-1989 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015036592 A1
- WO 2017174579 A1
- WO 2018073379 A1